# EUROPEAN PATENT SPECIFICATION

(11) **EP 3 720 741 B1**
(45) Date of publication and mention of the grant of the patent: **16.03.2022**
(21) Application number: 17811297.5
(22) Date of filing: 07.12.2017
(51) Int. Cl.: B60R 25/24, G07C 9/00

(54) **METHOD AND DEVICE FOR SECURING A VEHICLE BY PREVENTING AUTONOMOUS UNLOCKING**
VERFAHREN UND VORRICHTUNG ZUR SICHERUNG EINES FAHRZEUGS DURCH VERHINDERUNG VON SELBSTÄNDIGER ENTRIEGELUNG
PROCÉDÉ ET DISPOSITIF POUR SÉCURISER UN VÉHICULE EN EMPÊCHANT UN DÉVERROUILLAGE AUTONOME

(43) Date of publication of application: 14.10.2020
(73) Proprietor: Toyota Motor Europe, 1140 Brussels (BE)
(72) Inventor: BAILEY, Jonathan, 1140 Brussels (BE)
(74) Representative: Cabinet Beau de Loménie
(86) International application number: PCT/EP2017/081892
(87) International publication number: WO 2019/110113

(56) References cited:
- EP-A1- 2 048 046
- EP-A2- 0 908 589
- DE-A1-102013 226 840
- DE-C1- 19 907 372
- FR-A1- 3 008 366
- US-A1- 2007 115 100

## Description

### TECHNICAL FIELD

The present disclosure relates to securing a vehicle, and more particularly to a method and device for securing a vehicle.

More precisely, the disclosure relates to securing vehicles able to communicate wirelessly with a separate locking apparatus, the locking apparatus being able to autonomously unlock and/or allow starting the vehicle through wireless communications with the vehicle.

### TECHNOLOGICAL BACKGROUND

Vehicles are traditionally unlocked and started using a key, for example a mechanical key.

This solution has since been replaced by locking apparatuses, sometimes called "smart keys". A smart key and the vehicle are able to communicate wirelessly with each other so that through these communications, the smart key autonomously unlocks the vehicle. The smart key may also autonomously allow the vehicle to be started (typically, the user then starts the vehicle by pressing a button on the vehicle while pressing a pedal).

By autonomously, it is meant that there is no action performed by the user other than approaching the vehicle with the smart key so that the smart key is within wireless communication range with the vehicle. In other words, no button is pressed on the smart key and no manipulation of the smart key is performed other than a mere transportation.

Thus, as long as the smart key remains within wireless communication range with the vehicle, the vehicle can be unlocked or started.

The expression "keyless entry" is sometimes called to describe this method for unlocking a vehicle and of for starting a vehicle.

It has been shown that fraudulent methods can be used to open the vehicle without the smart key being close to the vehicle. For example, these fraudulent methods allow the vehicle to be unlocked even when the smart key is outside of the standard wireless communication range (typically 5 to 10 meters, or even of the order of 1 meter). These methods are known to the person skilled in the art as amplification/relay methods. DE102013226840 shows a method and a device for securing a vehicle according to the preamble of claims 1 and 9 respectively.

The present disclosure aims at securing vehicles and to impede the use of fraudulent methods.

### SUMMARY OF THE DISCLOSURE

The object of the present disclosure is to at least substantially remedy the above-mentioned drawbacks.

In this respect, the present disclosure relates to a method for securing a vehicle, as in claim 1, the vehicle being configured to communicate wirelessly with a separate locking apparatus, the locking apparatus (for example a smart key) being able to autonomously unlock and/or allow starting the vehicle through wireless communications with the vehicle, the method comprising receiving a predetermined command selected by the user on an interface and preventing the vehicle from being autonomously unlocked and/or allowed to be started by the locking apparatus through wireless communications with the vehicle.

For example, this method may be performed by the vehicle.

Thus, by receiving a predetermined command, the vehicle will place itself in a state in which fraudulent methods cannot be used to unlock and/or start the vehicle using the locking apparatus.

It should be noted that the vehicle is configured to communicate wirelessly with a separate locking apparatus at least when the distance between the locking apparatus and the vehicle is below a predetermined distance or only when a received signal strength of the signal emitted by the locking apparatus and received by the vehicle is above a predetermined threshold.

Furthermore, it should be noted that the locking apparatuses of the present disclosure may present additional functions such as autonomously opening gas caps or autonomously opening various elements of a vehicle. Thus, when the vehicle is prevented from being autonomously unlocked and/or allowed to be started by the locking apparatus through wireless communications with the vehicle, the vehicle may further be prevented from opening other elements (such as a gas cap).

According to an embodiment, the method comprises comprising providing the interface to the user when a first event is detected.

This interface may be provided on a touchscreen of a vehicle, or on a screen of a vehicle controlled by buttons, or on a portable device of a user such as a telephone. The interface may also be a voice command interface or it may be an interface based on gesture control.

According to an embodiment, the first event is chosen from the group comprising the vehicle stopping or the vehicle being turned off, a predefined location being reached (for example a destination set in a GPS system), and a predefined WiFi signal being detected.

According to the invention, the vehicle is prevented from being autonomously unlocked and/or allowed to be started by the locking apparatus through wireless communications with the vehicle for a preset duration or until a preset time (for example a specific hour).

According to the invention, the preset duration or preset time is elaborated according to history usage data of the vehicle.

History usage data of the vehicle may be, for example the previous durations or corresponding times (start, finish) of the vehicle being driven, or the previous durations or corresponding times during which the vehicle is turned off, or the location of the vehicle, or a combination of these.

Using the history usage allows providing a preset duration or a preset time which may match the desire of the user.

For example, if a preset duration is used the history usage data may be elaborated using a moving average of the duration during which the vehicle is turned off.

In fact, the preset duration or the preset time can be elaborated using statistical methods which use the history usage data.

According to an embodiment, the preset duration or preset time is further elaborated by taking a context parameter into account.

Thus, the method can comprise verifying this context parameter before selecting/elaborating a preset duration or a preset time.

According to an embodiment, the context parameter is the current time or the location.

For example, if the current time is after a predetermined time chosen to represent the time around which a user comes home in the evening, a preset duration may be used which has a duration long enough to last until the morning.

According to an embodiment, the preset duration or the preset time are chosen in a group of preset durations or preset times, and wherein the predetermined command of the user is used to select the preset duration or the preset time in the group of preset durations or preset times.

According to an embodiment, if an anomaly is detected before the end of the preset duration or before reaching the preset time, while the vehicle is prevented from being autonomously unlocked and/or allowed to be started by the locking apparatus through wireless communications with the vehicle, then:
preventing the vehicle from being autonomously unlocked and/or allowed to be started by the locking apparatus through wireless communications with the vehicle is performed until the detection of a second event.

By way of example, this anomaly can comprise an anomaly in the monitoring of the time which prevents the determination of the expiration of the preset duration or even the determination of the current time.

According to an embodiment, the second event is a user using the locking apparatus manually to unlock and/or allow starting the vehicle.

The present disclosure also relates to a device for securing a vehicle, as in claim 9, the vehicle being configured to communicate wirelessly with a separate locking apparatus, the locking apparatus being able to autonomously unlock and/or allow starting the vehicle through wireless communications with the vehicle, the device comprising a module for receiving a predetermined command selected by the user on the interface and a module for preventing the vehicle from being autonomously unlocked and/or allowed to be started by the locking apparatus through wireless communications with the vehicle.

This device may be comprised in the vehicle, for example embedded in the vehicle. Alternatively, the device may be a mobile device such as a telephone which may be carried by the user.

This device may be configured to perform all the embodiments of the method as defined above.

The present disclosure also relates to a system as in claim 10, comprising a vehicle and a device for securing the vehicle as defined above. The present disclosure relates to a vehicle as is claim 11, equipped with a device for securing the vehicle as defined above.

In a particular embodiment, the steps of the method for securing a vehicle as defined above are determined by computer program instructions.

Consequently, the invention is also directed to a computer program as in claim 12, for executing the steps of a method as described above when this program is executed by a computer.

This program can use any programming language and take the form of source code, object code, or a code intermediate between source code and object code, such as a partially compiled form, or any other desirable form.

The invention is also directed to a recording medium as in claim 13, readable by a computer including instructions of a computer program as described above.

The recording medium can be any entity or device capable of storing the program. For example, the medium can include storage means such as ROM, for example a CD ROM or a microelectronic circuit ROM, or magnetic storage means, for example a diskette (floppy disk or a hard disk).

Alternatively, the information medium can be an integrated circuit in which the program is incorporated, the circuit being adapted to execute the method in question or to be used in its execution.

### BRIEF DESCRIPTION OF THE DRAWINGS

The invention and advantages thereof will be better understood upon reading the detailed description which follows, of embodiments of the invention given as non-limiting examples. This description refers to the appended drawings, wherein:
- figure 1 is a schematic representation of a vehicle equipped with a device for securing the vehicle according to an exemplary embodiment,
- figure 2 is a schematic representation of a vehicle communicating with an external device for securing the vehicle according to an exemplary embodiment,
- figure 3 is a diagram illustrating the steps of a method for securing a vehicle according to an example,
- figure 4 is a block diagram of a device for securing a vehicle according to an example,
- figure 5 is an example of interface displayed to a user according to an example, and
- figure 6 is another example of interface displayed to a user according to an example.

### DETAILED DESCRIPTION OF EMBODIMENTS

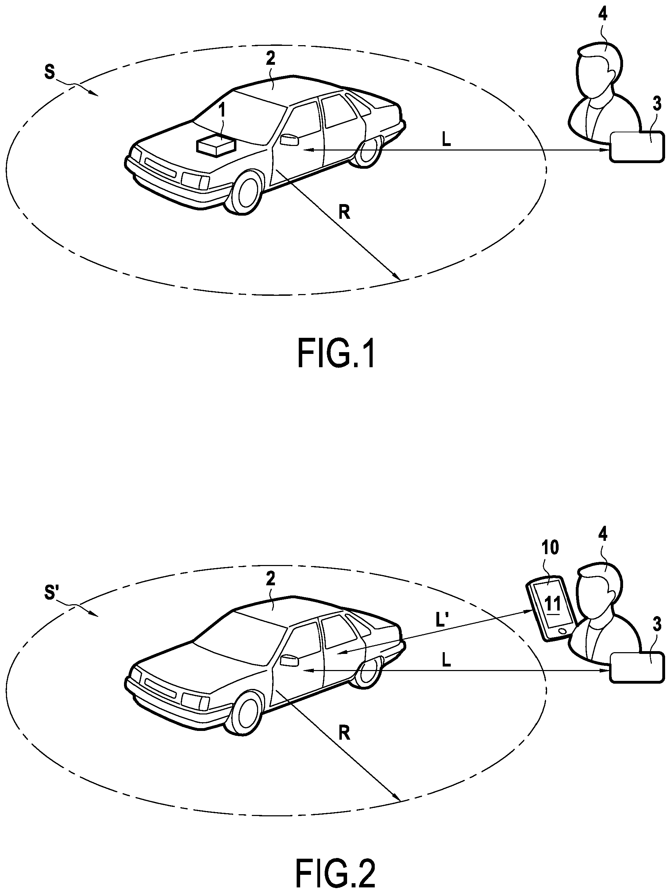

An exemplary system for securing a vehicle will now be described in reference to figure 1.

On this figure, a device 1 for securing a vehicle 2 (a car in this example) has been schematically represented. The device 1 is inside the vehicle. For example, the device 1 may be part of an Electronic Control Unit (ECU) of the vehicle.

The vehicle 2 is further configured to communicate wirelessly with a separate locking apparatus 3 which has also been represented on the figure. This locking apparatus 3 is able to autonomously unlock and/or allow starting the vehicle through wireless communications with the vehicle. These wireless communications are represented on the figure by a communication link L.

Thus, the locking apparatus 3 may be called a "smart key" by the person skilled in the art. The locking apparatus 3 and the vehicle 2 participate in what is sometimes referred to as a "keyless entry" method in which there is no manipulation of a key by a user to unlock the vehicle, or at least, the locking apparatus 3 is merely brought in the vicinity of the vehicle 2 so as to be able to communicate with the vehicle 2.

By brought in the vicinity of the vehicle 2, it is meant that the distance between the locking apparatus 3 and the vehicle 2 has to be less than a predetermined distance. The predetermined distance defines a distance range R which has been represented on figure 1. It should be noted that on figure 1, the locking apparatus 3 is outside of the distance range R.

In order to prevent the vehicle 2 from being unlocked through fraudulent methods while the locking apparatus 3 is outside of the distance range R, the vehicle is equipped with the device 1 for securing the vehicle 2 so as to form a system S.

The device 1 comprises a module for receiving a predetermined command selected by the user on the interface and a module preventing the vehicle from being autonomously unlocked and/or allowed to be started by the locking apparatus through wireless communications with the vehicle, these modules will be described in more detail hereinafter.

Thus, once the predetermined command has been received, it is impossible for the locking apparatus 3 and the vehicle 2 to autonomously unlock and/or allow starting the vehicle through wireless communications.

The vehicle may then only be unlocked and/or started through an action of the user on the locking apparatus: this process is not autonomous with respect to the locking apparatus. By way of example, the user may have to press a button on the locking apparatus or the user may have to insert a mechanical key in the vehicle.

Figure 2 is schematic representation of a system S' which is an alternative to the system represented on figure 1. It should be noted that in the present application, elements referenced different figures by the same references are analogous.

On figure 2, a vehicle 2 (a car in this example) is represented with a device 10 for securing the vehicle which is external and separate from the vehicle 2. By way of example, the device 10 may be a mobile terminal able to communicate with the vehicle through communication link L' which may consist in wired connections (for example when the device is connected via "USB: Universal Serial Bus" to the vehicle) or wireless connections (for example via Bluetooth, WiFi, or through a network such as the internet).

The vehicle 2 is further configured to communicate wirelessly with a separate locking apparatus 3 which has also been represented on the figure. This locking apparatus 3 is able to autonomously unlock and/or allow starting the vehicle through wireless communications with the vehicle. These wireless communications are represented on the figure by a communication link L.

In order to be able to communicate with each other, the locking apparatus 3 and the vehicle 2 have to be spaced by a distance which is less than a predefined distance defining a range R represented on figure 2. It should be noted that on figure 2, the locking apparatus 3 is outside of the distance range R.

In order to prevent the vehicle 2 from being unlocked through fraudulent methods while the locking apparatus 3 is outside of the distance range 3, the system S' comprises the device 10 for securing the vehicle 2. This device 10 comprises a touchscreen 11 on which an interface may be provided so that the user can send a command to the vehicle 2 through communication link L'.

If the user selects a predetermined command on an interface displayed on the touchscreen 11 of the device 10, the device 10 therefore receives a predetermined command selected by the user. The device 10 is further equipped with a module (not represented) for preventing the vehicle from being autonomously unlocked and/or allowed to be started by the locking apparatus through wireless communications with the vehicle.

By way of example, the device 10 may send a command to the vehicle 2 through communication link L' so as to command the vehicle to be in a state in which it cannot be autonomously unlocked and/or allowed to be started by the locking apparatus through wireless communications with the vehicle.

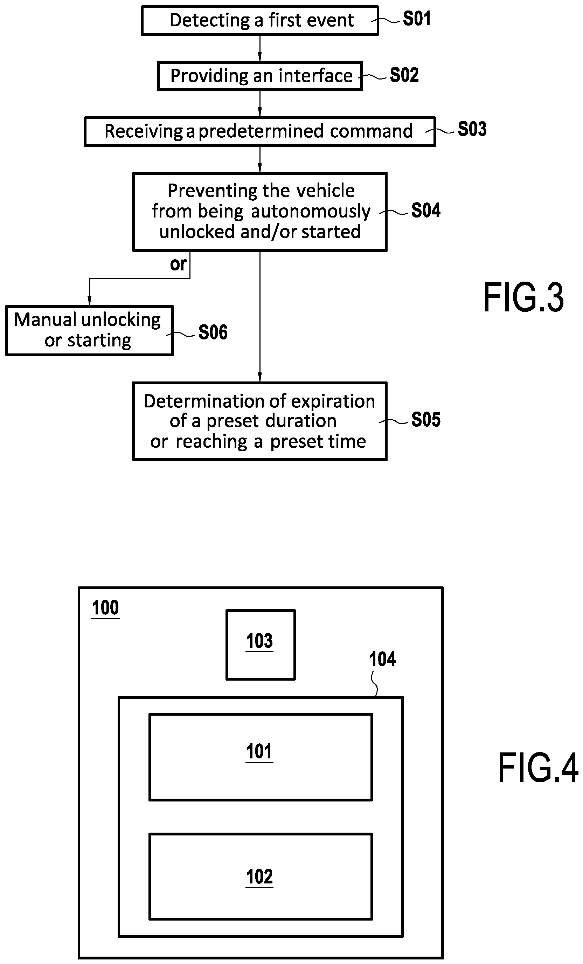

On figure 3, a diagram illustrating the steps of a method for securing a vehicle has been represented. This method may be performed by the devices 1 and 10 described in reference to figure 2, and may more generally be performed by a system comprising a vehicle and a locking apparatus able to autonomously unlock and/or allow starting the vehicle through wireless communications with the vehicle.

In a first step S01, a first event is detected. This first event may consist in the vehicle stopping or being turned off.

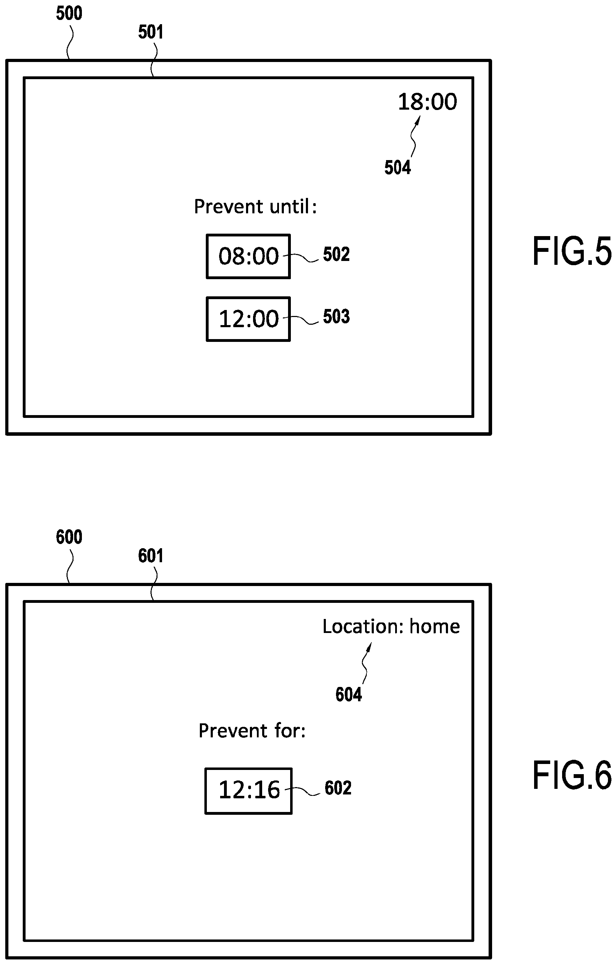

In a second step S02, an interface is provided to the user. This interface may be provided on a touchscreen placed inside the vehicle (for example if the device 1 of figure 1 is used) or on a touchscreen of a mobile terminal of the user (for example if the external device 10 of figure 2 is used). On this interface, it is possible to select the predetermined command. Examples of interfaces will be given hereinafter in reference to figures 5 and 6.

Subsequently, step S03 is carried out in which a predetermined command is received. This command may be received by the device 1 of figure 1 or by the external device 10 of figure 2 (the external device 10 may then transmit this command to the vehicle).

In step S04, the vehicle is prevented from being autonomously unlocked and/or allowed to be started by the locking apparatus through wireless communications with the vehicle.

By way of example, the predetermined command may comprise a preset duration of a preset time. The vehicle may then only be prevented to be autonomously unlocked and/or allowed to be started by the locking apparatus through wireless communications with the vehicle for this preset duration or until the preset time.

In step S05, it is determined whether the preset duration has expired or whether the preset time has been reached. Once the preset duration has expired and once the preset time has been reached, the vehicle may be allowed to be unlocked and/or started autonomously by the locking apparatus through wireless communications.

It should be noted that if an anomaly occurs which prevents step S05 from being carried out, then the vehicle may be prevented from being autonomously unlocked and/or allowed to be started by the locking apparatus through wireless communications with the vehicle is performed until the detection of a second event. For example, this anomaly may be detected before the end of the preset duration or before reaching the preset time.

Before step S05 and as an alternative, it is possible to carry out step S06 in which manual unlocking and/or starting is performed, during which an action is performed by the user on the unlocking apparatus (for example pressing a button or using a mechanical key).

Figure 4 is a schematic diagram of a device 100 for securing a vehicle.

This device 100 may be integrated in the vehicle, for example like the device 1 described in reference to figure 1, or it may also be an external device such as the device 10 described in reference to figure 2.

The device 100 comprises a module 101 for receiving a predetermined command selected by the user on an interface, and a module 102 for preventing the vehicle from being autonomously unlocked and/or allowed to be started by the locking apparatus through wireless communications with the vehicle.

In this embodiment, the modules 101 and 102 are implemented by means of software instructions which may be executed by a processor 103 of the device 100.

The software instructions, or modules 101 and 102, are stored in a non-volatile memory 104 of the device 100.

Figure 5 shows an exemplary interface provided to secure a vehicle. More precisely, reference 500 refers, on this figure, to either a device for securing a vehicle such as the external device 10 described in relation to figure 2 and equipped with a display screen 501, or to the dashboard of a vehicle which is equipped with a display screen 501.

This interface may be shown to the user once the vehicle is turned off.

The display screen may be a touchscreen such as a capacitive touchscreen.

On the display screen 501, there is provided an interface having two buttons 502 and 503.

The button 502, when pressed, leads to preventing the vehicle from being autonomously unlocked and/or allowed to be started by a locking apparatus through wireless communications with the vehicle until 08:00 (all times in the present application are written in the 24 hour format) is reached.

The button 503, when pressed, leads to preventing the vehicle from being autonomously unlocked and/or allowed to be started by a locking apparatus through wireless communications with the vehicle until 12:00 is reached.

08:00 and 12:00 are two preset time presented to the user through the interface. These preset times are elaborated by taking a context parameter into account. In this example, the context parameter is the current time 504 (here 18:00).

By taking into account, it is meant that the two preset times may be chosen in a group of preset times in accordance with the current time.

For example, the group of preset times may comprise: 08:00, 12:00, and 17:30.

The method for securing a vehicle can use a mapping of times taking as input the current time and which outputs one or more possible preset times. In the present example, 18:00 is associated with the preset times 8:00 and 12:00.

An alternative interface is shown on figure 6. On this figure, reference 600 refers, on this figure, to either a device for securing a vehicle such as the external device 10 described in relation to figure 2 and equipped with a display screen 601, or to the dashboard of a vehicle which is equipped with a display screen 601.

This interface may be shown to the user once the vehicle is turned off.

The display screen may be a touchscreen such as a capacitive touchscreen.

On the display screen 601, there is provided an interface having one button 602.

The button 602, when pressed, leads to preventing the vehicle from being autonomously unlocked and/or allowed to be started by a locking apparatus through wireless communications with the vehicle until for 12 hours and sixteen minutes (12:16).

12:16 is a preset duration presented to the user through the interface. This preset duration is elaborated according to history usage data of the vehicle.

For example, the history usage data may be elaborated using a moving average of the duration during which the vehicle is turned off.

Additionally, the preset duration is, in this example, further elaborated by taking a context parameter into account and the context parameter is the current location of the vehicle 603: "Home". For example, two moving averages may be used, one associated with the location "work" and one associated with the location "home".

## Claims

1. A method for securing a vehicle, the vehicle (1) being configured to communicate wirelessly with a separate locking apparatus (3), the locking apparatus being able to autonomously unlock and/or allow starting the vehicle through wireless communications with the vehicle,
the method comprising receiving (S03) a predetermined command selected by the user on an interface and preventing (S04) the vehicle from being autonomously unlocked and/or allowed to be started by the locking apparatus through wireless communications with the vehicle,
wherein the vehicle is prevented from being autonomously unlocked and/or allowed to be started by the locking apparatus through wireless communications with the vehicle for a preset duration or until a preset time,
**characterized in that** the preset duration or preset time is being elaborated according to history usage data of the vehicle.

2. The method according to claim 1, comprising providing (S02) the interface to the user when a first event is detected (S01).

3. The method according to claim 2, wherein the first event is the vehicle stopping or the vehicle being turned off.

4. The method according to claim 1, wherein the preset duration or preset time is further elaborated by taking a context parameter into account.

5. The method according to claim 4, wherein the context parameter is the current time or the location.

6. The method according to any one of claims 1 to 5, wherein the preset duration or the preset time are chosen in a group of preset durations or preset times,
and wherein the predetermined command of the user is used to select the preset duration or the preset time in the group of preset durations or preset times.

7. The method according to any one of claims 1 to 6, wherein if an anomaly is detected before the end of the preset duration or before reaching the preset time, while the vehicle is prevented from being autonomously unlocked and/or allowed to be started by the locking apparatus through wireless communications with the vehicle, then:
preventing the vehicle from being autonomously unlocked and/or allowed to be started by the locking apparatus through wireless communications with the vehicle is performed until the detection of a second event.

8. The method according to claim 7, wherein the second event is a user using the locking apparatus manually to unlock and/or allow starting the vehicle.

9. A device for securing a vehicle, the vehicle (1) being configured to communicate wirelessly with a separate locking apparatus (3), the locking apparatus being able to autonomously unlock and/or allow starting the vehicle through wireless communications with the vehicle,
the device comprising a module (101) for receiving a predetermined command selected by the user on an interface and a module for preventing (102) the vehicle from being autonomously unlocked and/or allowed to be started by the locking apparatus through wireless communications with the vehicle,
wherein the vehicle configured to be prevented from being autonomously unlocked and/or allowed to be started by the locking apparatus through wireless communications with the vehicle for a preset duration or until a preset time, **characterized in that** the preset duration or preset time is being elaborated according to history usage data of the vehicle.

10. A system comprising a vehicle and a device for securing the vehicle according to claim 9, whereby the device is external and separate from the vehicle.

11. A vehicle equipped with a device for securing the vehicle according to claim 9.

12. A computer program including instructions to cause the device of claim 9 to execute the steps of a method according to any one of claims 1 to 8 when said program is executed by a computer.

13. A recording medium readable by a computer and having recorded thereon a computer program according to claim 12.

## Patentansprüche

1. Verfahren zum Sichern eines Fahrzeugs, wobei das Fahrzeug (1) dazu konfiguriert ist, drahtlos mit einer separaten Verriegelungsvorrichtung (3) zu kommunizieren, wobei die Verriegelungsvorrichtung dazu in der Lage ist, das Fahrzeug über drahtlose Kommunikation mit dem Fahrzeug autonom zu entriegeln und/oder ein Starten des Fahrzeugs zuzulassen,
wobei das Verfahren das Empfangen (S03) eines vom Benutzer ausgewählten vorbestimmten Befehls auf einer Schnittstelle und das Verhindern (S04) des autonomen Entriegelns und/oder Zulassens des Startens des Fahrzeugs durch die Verriegelungsvorrichtung über drahtlose Kommunikation mit dem Fahrzeug umfasst.
wobei für eine voreingestellte Dauer oder bis zu einem voreingestellten Zeitpunkt verhindert wird, dass das Fahrzeug durch die Verriegelungsvorrichtung über drahtlose Kommunikation mit dem Fahrzeug autonom entriegelt wird und/oder gestartet werden darf,
**dadurch gekennzeichnet, dass**
die voreingestellte Dauer oder der voreingestellte Zeitpunkt gemäß der Nutzungsdatenhistorie des Fahrzeugs elaboriert wird.

2. Verfahren nach Anspruch 1, umfassend das Bereitstellen (S02) der Schnittstelle für den Benutzer, wenn ein erstes Ereignis erfasst wird (S01).

3. Verfahren nach Anspruch 2, wobei das erste Ereignis das Anhalten des Fahrzeugs oder das Abschalten des Fahrzeugs ist.

4. Verfahren nach Anspruch 1, wobei die voreingestellte Dauer oder der voreingestellte Zeitpunkt weiter elaboriert wird, indem ein Kontextparameter berücksichtigt wird.

5. Verfahren nach Anspruch 4, wobei der Kontextparameter die aktuelle Zeit oder der Ort ist.

6. Verfahren nach einem der Ansprüche 1 bis 5, wobei die voreingestellte Dauer oder der voreingestellte Zeitpunkt aus einer Gruppe von voreingestellten Dauern oder voreingestellten Zeitpunkten ausgewählt wird,
und wobei der vorbestimmte Befehl des Benutzers verwendet wird, um die voreingestellte Dauer oder den voreingestellten Zeitpunkt aus der Gruppe von voreingestellten Dauern oder voreingestellten Zeitpunkten auszuwählen.

7. Verfahren nach einem der Ansprüche 1 bis 6, wobei, wenn eine Abweichung vor dem Ende der voreingestellten Dauer oder vor dem Erreichen des voreingestellten Zeitpunkts erfasst wird, während verhindert wird, dass das Fahrzeug durch die Verriegelungsvorrichtung über drahtlose Kommunikation mit dem Fahrzeug autonom entriegelt wird und/oder gestartet werden darf, dann:
das Verhindern des autonomen Entriegelns und/oder Zulassens des Startens des Fahrzeugs durch die Verriegelungsvorrichtung über drahtlose Kommunikation mit dem Fahrzeug durchgeführt wird, bis ein zweites Ereignis erfasst wird.

8. Verfahren nach Anspruch 7, wobei das zweite Ereignis ein Benutzer ist, der die Verriegelungsvorrichtung manuell verwendet, um das Fahrzeug zu entriegeln und/oder das Starten des Fahrzeugs zuzulassen.

9. Vorrichtung zum Sichern eines Fahrzeugs, wobei das Fahrzeug (1) dazu konfiguriert ist, drahtlos mit einer separaten Verriegelungsvorrichtung (3) zu kommunizieren, wobei die Verriegelungsvorrichtung dazu in der Lage ist, das Fahrzeug über drahtlose Kommunikation mit dem Fahrzeug autonom zu entriegeln und/oder ein Starten des Fahrzeugs zuzulassen,
wobei die Vorrichtung ein Modul (101) zum Empfangen eines vom Benutzer ausgewählten vorbestimmten Befehls auf einer Schnittstelle und ein Modul zum Verhindern (102) des autonomen Entriegelns und/oder Zulassens des Startens des Fahrzeugs durch die Verriegelungsvorrichtung über drahtlose Kommunikation mit dem Fahrzeug umfasst,
wobei das Fahrzeug so konfiguriert ist, dass für eine voreingestellte Dauer oder bis zu einem voreingestellten Zeitpunkt verhindert wird, dass es durch die Verriegelungsvorrichtung über drahtlose Kommunikation mit dem Fahrzeug autonom entriegelt wird und/oder gestartet werden darf,
**dadurch gekennzeichnet, dass**
die voreingestellte Dauer oder der voreingestellte Zeitpunkt gemäß der Nutzungsdatenhistorie des Fahrzeugs elaboriert wird.

10. System, umfassend ein Fahrzeug und eine Vorrichtung zum Sichern des Fahrzeugs nach Anspruch 9, wobei die Vorrichtung extern und separat von dem Fahrzeug ist.

11. Fahrzeug, das mit einer Vorrichtung zum Sichern des Fahrzeugs nach Anspruch 9 ausgestattet ist.

12. Computerprogramm mit Anweisungen, um zu bewirken, dass die Vorrichtung nach Anspruch 9 die Schritte eines Verfahrens nach einem der Ansprüche 1 bis 8 ausführt, wenn das Programm von einem Computer ausgeführt wird.

13. Aufzeichnungsmedium, das von einem Computer lesbar ist und auf dem ein Computerprogramm nach Anspruch 12 aufgezeichnet ist.

## Revendications

1. Procédé pour sécuriser un véhicule, le véhicule (1) étant configuré pour communiquer sans fil avec un appareil de verrouillage séparé (3), l'appareil de verrouillage étant capable de façon autonome de déverrouiller et/ou permettre de démarrer le véhicule par l'intermédiaire de communications sans fil avec le véhicule,
le procédé comprenant le fait de recevoir (S03) une commande prédéterminée sélectionnée par l'utilisateur sur une interface et d'empêcher (S04) le véhicule d'être de façon autonome déverrouillé et/ou autorisé à être démarré par l'appareil de verrouillage par l'intermédiaire de communications sans fil avec le véhicule,
le véhicule étant empêché d'être de façon autonome déverrouillé et/ou autorisé à être démarré par l'appareil de verrouillage par l'intermédiaire de communications sans fil avec le véhicule pendant une durée préétablie ou jusqu'à un temps préétabli,
**caractérisé en ce que** la durée préétablie ou le temps préétabli est élaboré en fonction d'un historique de données d'utilisation du véhicule.

2. Procédé selon la revendication 1, comprenant le fait de fournir (S02) l'interface pour l'utilisateur quand un premier événement est détecté (S01).

3. Procédé selon la revendication 2, selon lequel le premier événement est le véhicule qui s'arrête ou le véhicule qui est éteint.

4. Procédé selon la revendication 1, selon lequel la durée préétablie ou le temps préétabli est en outre élaboré en prenant en considération un paramètre de contexte.

5. Procédé selon la revendication 4, selon lequel le paramètre de contexte est le temps actuel ou l'emplacement.

6. Procédé selon l'une quelconque des revendications 1 à 5, selon lequel la durée préétablie ou le temps préétabli sont choisis dans un groupe de durées préétablies ou de temps préétablis,
et selon lequel la commande prédéterminée de l'utilisateur est utilisée pour sélectionner la durée préétablie ou le temps préétabli dans le groupe de durées préétablies ou de temps préétablis.

7. Procédé selon l'une quelconque des revendications 1 à 6, selon lequel, si une anomalie est détectée avant la fin de la durée préétablie ou avant d'atteindre le temps préétabli, alors que le véhicule est empêché d'être de façon autonome déverrouillé et/ou autorisé à être démarré par l'appareil de verrouillage par l'intermédiaire de communications sans fil avec le véhicule, alors :
le fait d'empêcher le véhicule d'être de façon autonome déverrouillé et/ou autorisé à être démarré par l'appareil de verrouillage par l'intermédiaire de communications sans fil avec le véhicule est réalisé jusqu'à la détection d'un deuxième événement.

8. Procédé selon la revendication 7, selon lequel le deuxième événement est un utilisateur qui utilise l'appareil de verrouillage manuellement pour déverrouiller et/ou pour permettre le démarrage du véhicule.

9. Dispositif pour sécuriser un véhicule, le véhicule (1) étant configuré pour communiquer sans fil avec un appareil de verrouillage séparé (3), l'appareil de verrouillage étant capable de façon autonome de déverrouiller et/ou autoriser à démarrer le véhicule par l'intermédiaire de communications sans fil avec le véhicule,
le dispositif comprenant un module (101) pour recevoir une commande prédéterminée sélectionnée par l'utilisateur sur une interface et un module (102) pour empêcher le véhicule d'être de façon autonome déverrouillé et/ou autorisé à être démarré par l'appareil de verrouillage par l'intermédiaire de communications sans fil avec le véhicule,
le véhicule étant configuré pour être empêché d'être de façon autonome déverrouillé et/ou autorisé à être démarré par l'appareil de verrouillage par l'intermédiaire de communications sans fil avec le véhicule pendant une durée préétablie ou jusqu'à un temps préétabli,
**caractérisé en ce que** la durée préétablie ou le temps préétabli est élaboré en fonction d'un historique de données d'utilisation du véhicule.

10. Système comprenant un véhicule et un dispositif pour sécuriser le véhicule selon la revendication 9, le dispositif étant externe et séparé du véhicule.

11. Véhicule équipé d'un dispositif pour sécuriser le véhicule selon la revendication 9.

12. Programme informatique comprenant des instructions pour amener le dispositif selon la revendication 9 à exécuter les étapes d'un procédé selon l'une quelconque des revendications 1 à 8 quand ledit programme est exécuté par un ordinateur.

13. Support d'enregistrement lisible par un ordinateur et ayant enregistré dessus un programme informatique selon la revendication 12.
